(19) Europäisches Patentamt
European Patent Office
Office européen des brevets

(11) **EP 3 250 538 B1**

(12) **EUROPEAN PATENT SPECIFICATION**

(45) Date of publication and mention
of the grant of the patent:
**24.06.2020 Bulletin 2020/26**

(51) Int Cl.:
*C04B 35/528* (2006.01)     *C01B 32/25* (2017.01)
*C04B 35/626* (2006.01)     *C04B 35/628* (2006.01)
*C04B 35/63* (2006.01)      *C04B 35/645* (2006.01)
*C09K 3/14* (2006.01)

(21) Application number: **16707269.3**

(22) Date of filing: **28.01.2016**

(86) International application number:
**PCT/US2016/015332**

(87) International publication number:
**WO 2016/123321 (04.08.2016 Gazette 2016/31)**

(54) **FRIABLE CERAMIC-BONDED DIAMOND COMPOSITE PARTICLES AND METHODS TO PRODUCE THE SAME**

SPRÖDE KERAMIKGEBUNDENE DIAMANTVERBUNDPARTIKEL UND VERFAHREN ZUR DEREN HERSTELLUNG

PARTICULES DE COMPOSITE DE DIAMANT LIÉ PAR UNE CÉRAMIQUE FRIABLE ET PROCÉDÉS POUR LEUR PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.01.2015 US 201562108628 P**

(43) Date of publication of application:
**06.12.2017 Bulletin 2017/49**

(73) Proprietors:
• **Diamond Innovations, Inc.
Worthington, OH 43085 (US)**
• **Easley, Thomas
Bexley, Ohio 43209 (US)**
• **Zhang, Kai
Westerville, Ohio 43081 (US)**

(72) Inventors:
• **EASLEY, Thomas
Bexley, Ohio 43209 (US)**
• **ZHANG, Kai
Westerville, Ohio 43081 (US)**

(74) Representative: **Neilson, Martin Mark
Urquhart-Dykes & Lord LLP
Arena Point
Merrion Way
Leeds LS2 8PA (GB)**

(56) References cited:
WO-A1-99/12867          JP-A- H08 113 774
US-A- 4 874 398          US-A1- 2005 074 355
US-A1- 2013 167 447

**Description**

FIELD OF THE DISCLOSURE

The present disclosure relates to a ceramic-bonded diamond composite. More specifically, the present disclosure relates to methods of production of ceramic-bonded diamond composites composed of diamond, silicon carbide and silicon that are friable to form diamond composite particles as well as to the diamond particles, per se. Uses for such diamond composite particles include wear applications, such as grinding, cutting and dicing.

BACKGROUND

In the discussion that follows, reference is made to certain structures and/or methods. However, the following references should not be construed as an admission that these structures and/or methods constitute prior art. Applicant expressly reserves the right to demonstrate that such structures and/or methods do not qualify as prior art against the present invention.

Solid compacts comprised of diamond crystals bonded by refractory carbide or metallic phases, such as silicon carbide (SiC), are known, for example, from U.S. Patent Nos. 4,874,398; 4,948,388; 4,985,051; 5,010,043; 5,106,393, and WO99/12867. Generally, such material is formed into a densified compact (or blank). However, the densified compact (or blank) is difficult to mechanically process, including mechanically breaking into particulate form, and the densified compact is typically either formed near net shape (see U.S. Patent Application Publication 2013/0167447, or, if necessary, is further formed into a product shape by, for example, a cutting process, such as Electrical Discharge Machining (EDM).

Typical uses and products for these conventional compacts include dressing and truing grinding wheels; die blanks, for example, for wire stranding, bunching and compacting applications; wear parts and nozzles; and high pressure research anvils and backing plates. In general as well as in the above applications, the ceramic-bonded diamond composites are formed as a densified compact, the characteristics of which inherently limits its applications and minimizes or prevents the wear and abrasive properties of the ceramic-bonded diamond composites from being utilized in particulate form. JPH08113774 discloses mixing 10 weight parts of Si powder with 100 weight parts of diamond powder of particle size 120-140 mesh. The powder was heated in a crucible to 1400°C. The Si reacts completely to SiC, bonding together the diamond grains.

SUMMARY

There is a need for an improved composite diamond material that is both friable into particulate form as well as high performing when incorporated into wear and abrasive applications. If ceramic-bonded diamond composites could be formed in particulate form rather than in a densified compact form, then numerous uses could be realized including, for example, uses as a particle embedded in a matrix or on a surface to impart abrasive and wear related properties, such as to a cutting apparatus, dicing blade, grinding wheel, saw blades and so forth.

An exemplary method to produce a ceramic-bonded diamond composite particle includes forming a diamond feedstock including a plurality of diamond grains and silicon particles and subjecting the diamond feedstock to at least one pre-consolidation process to form a granule. The method also includes forming a densified compact in a consolidation process using the granule, where the densified compact including ceramic-bonded diamond composite material, and mechanically processing the densified compact in a post-consolidation process in which a plurality of ceramic-bonded diamond composite particles are formed. The ceramic-bonded diamond composite particles include a plurality of diamond grains and silicon carbide reaction bonded to the diamond grains. A composition of the ceramic-bonded diamond composite particle includes 60-90 wt.%, preferably 70-90 wt.%, more preferably 79-81 wt.%, more preferably 80 wt.% diamond, 10-40 wt.% silicon carbide, ≤2 wt.% silicon, wherein the ceramic-bonded diamond composite particle has a mesh size of between 400 microns (40/50) and 35 microns (400/500) and a toughness index of between 40 and 100.

Another exemplary method to produce a ceramic-bonded diamond composite particle includes forming a diamond feedstock including a plurality of diamond particles and silicon particles, mixing the diamond feedstock with a binder and a solvent to form a slurry, spraying the slurry into liquid nitrogen to form a plurality of frozen granules followed by freeze drying the frozen granule to remove the solvent from the granule or spraying the slurry into a heated chamber to remove volatile components, and heating the granule in an inert or reducing atmosphere to remove the binder from the granule. The method also includes sintering the porous granule in an inert or reducing atmosphere to form a grit of ceramic-bonded diamond composite material and mechanically processing the grit to form a plurality of ceramic-bonded diamond composite particles. The ceramic-bonded diamond composite particles include a plurality of diamond particles and silicon carbide reaction bonded to the diamond particles. A composition of the ceramic-bonded diamond composite particle includes 60-90 wt.%, preferably 70-90, more preferably 79-81 wt.%, more preferably 80 wt.% diamond, 10-40 wt.% silicon carbide, ≤2 wt.% silicon, wherein the ceramic-bonded diamond composite particle has a mesh size of between 400 microns (40/50) and 35 microns (400/500) and a toughness index of between 40 and 100.

A further exemplary method to produce a ceramic-bonded diamond composite particle includes forming a diamond feedstock including a plurality of diamond grains and silicon particles and particles of inert material, subjecting the diamond feedstock to a consolidation process that forms a densified compact including ceramic-bonded diamond composite material from the diamond feedstock, subjecting the densified compact to a post-consolidation process in which the densified compact is mechanically processed to form a plurality of ceramic-bonded diamond composite particles, and separating particles of inert material from the plurality of ceramic-bonded diamond composite particles. The ceramic-bonded diamond composite particles include a plurality of diamond grains and silicon carbide reaction bonded to the diamond grains and a composition of the ceramic-bonded diamond composite particle includes 60-90 wt.%, preferably 79-81 wt.%, more preferably 80 wt.% diamond, 10-40 wt.% silicon carbide, $\leq 2$ wt.% silicon. The ceramic-bonded diamond composite particle has a mesh size of between 400 microns (40/50) and 35 microns (400/500) and a toughness index of 40 to 100.

An exemplary embodiment of a ceramic-bonded diamond composite particle include a plurality of diamond grains and silicon carbide reaction bonded to the diamond grains. A composition of the ceramic-bonded diamond composite particle includes 70-90 wt.%, preferably 79-81 wt.%, more preferably 80 wt.% diamond, 10-30 wt.% silicon carbide, $\leq 2$ wt.% silicon, wherein the ceramic-bonded diamond composite particle has a mesh size of between 400 microns (40/50) and 35 microns (400/500) and a toughness index of between 40 and 100.

Another exemplary embodiment of a ceramic-bonded diamond composite particle includes a plurality of ceramic-bonded diamond particles and an inert material. The ceramic-bonded diamond composite includes a plurality of diamond grains and silicon carbide reaction bonded to the diamond grains. A composition of the ceramic-bonded diamond composite is 70-90 wt.%, preferably 79-81 wt.%, more preferably 80 wt.% diamond, 10-30 wt.% silicon carbide, $\leq 2$ wt.% silicon, wherein the ceramic-bonded diamond composite particle has a mesh size of between 400 microns (40/50) and 35 microns (400/500) and a toughness index of between 40 and 100.

## BRIEF DESCRIPTION OF THE DRAWING

The following detailed description of preferred embodiments can be read in connection with the accompanying drawings in which like numerals designate like elements and in which:

FIGS. 1A and 1B are SEM photomicrographs of an exemplary embodiment of a ceramic-bonded diamond composite particle.

FIG. 1C is a SEM photomicrograph of an exemplary embodiment of a ceramic-bonded diamond composite particle in which compositional analysis has been conducted using EDX.

FIG. 2 is a graphical representation of a method to produce a ceramic-bonded diamond composite particle according to a first aspect.

FIG. 3 is a graphical representation of another method to produce a ceramic-bonded diamond composite particle according to a second aspect.

FIGS. 4A and 4B are graphical representations of a further method to produce a ceramic-bonded diamond composite particle according to a third and fourth aspect and including additional processes A to E.

FIG. 5 is a graphical representation of process A.

FIG. 6 is a graphical representation of process B.

FIG. 7 is a graphical representation of process C.

FIG. 8 is a graphical representation of process D.

FIG. 9 is a graphical representation of process E.

FIG. 10 is a graphical representation of an additional method to produce a ceramic-bonded diamond composite particle according to a fifth aspect in which an optional surface modification process is included as an additional or further process.

FIGS. 11A and 11B are SEM photomicrograph at 5000x magnification showing diamond particles before (FIG. 11B) and after (FIG. 11A) surface oxidation.

FIG. 12 is a graphical representation of a still further method to produce a ceramic-bonded diamond composite particle according to a sixth aspect in which a coating process is included as a further process.

## DETAILED DESCRIPTION

Articles and methods of the present disclosure are directed to ceramic-bonded diamond composite particles that exhibit desirable properties. The ceramic-bonded diamond composite particles may exhibit relatively high levels of diamond content, which may contribute to the properties of the composite particles. Methods to produce a ceramic-bonded diamond composite particle according to the present disclosure include forming a diamond feedstock having a plurality of diamond grains and silicon particles and subjecting the diamond feedstock to at least one pre-consolidation process to form a granule. The granule is subjected to a consolidation process to form a densified compact. In one embodiment, the consolidation process includes a high pressure high temperature process. The resulting densified compact forms a ceramic-bonded diamond composite material. The methods also include mechanically processing the densified compact in a post-consolidation process in which a plurality of ceramic-bonded diamond composite particles are formed. The ceramic-bonded diamond composite particles include a plurality of diamond grains and silicon carbide reaction bonded to the diamond grains. A composition of the ceramic-bonded diamond composite particle includes 60-90 wt.%, preferably 70-90 wt.%, more preferably 79-81 wt.%, more preferably 80 wt.% diamond, 10-40 wt.% silicon carbide, ≤2 wt.% silicon.

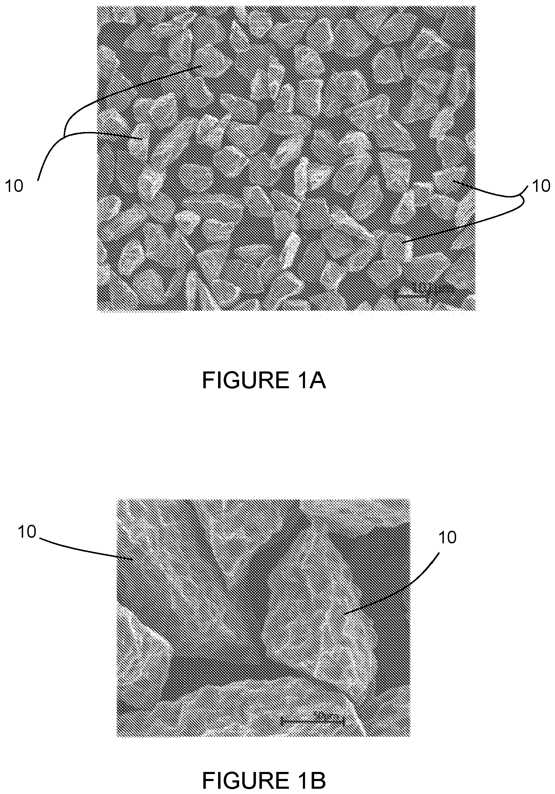

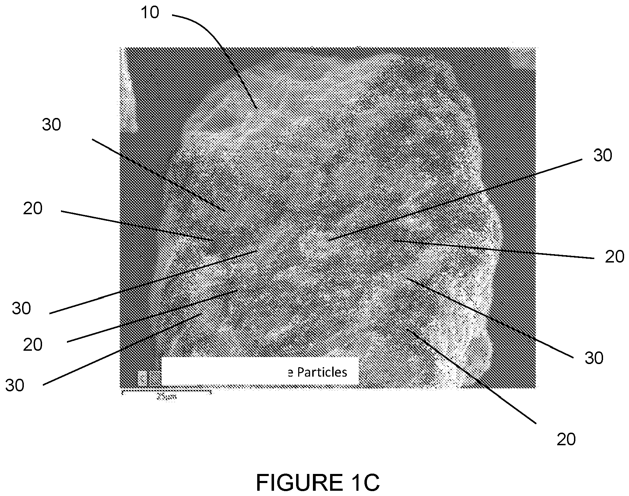

FIGS. 1A to 1B are photomicrographs of an exemplary embodiment of a ceramic-bonded diamond composite particle 10. FIG. 1C is a SEM photomicrograph of an exemplary embodiment of a ceramic-bonded diamond composite particle in which compositional analysis has been conducted using EDX. The photomicrographs in FIGS. 1A to 1C were obtained by scanning electron microscopy (SEM) at various magnifications (100X for FIG. 1A; 500 X for FIG. 1B and 1000 X for FIG. 1C). The SEM equipment was a Hitachi 2600, where the voltage and working distance were set at 25kV and 13mm, respectively.

The ceramic-bonded diamond composite particle 10 comprises a plurality of diamond particles bonded together by silicon carbide. Mapping of a composite particle with Energy-Dispersive X-ray spectroscopy (EDX) is shown in FIG. 1C, in which areas 20 of Si (indicating areas of SiC) are discriminated from areas 30 of carbon (indicating areas of diamond). The EDX mapping the areas 30 of carbon are bonded together by a continuous SiC matrix 20 indicating that the diamond particles are sintered together by silicon carbide binder.

Silicon outside the silicon carbide is present in residual amounts remaining from the manufacturing process. The constituents of the ceramic-bonded diamond composite particle 10 can be present in other suitable amounts within the following ranges: 60-90 wt.%, alternatively 70-90 wt.%, alternatively 75-90 wt.%, alternatively 79-81 wt.% or 80 wt.% diamond; 10-40 wt.% silicon carbide, alternatively ≥12 wt.% or ≥15 wt% to ≤20 wt.% or ≤25 wt.% silicon carbide; and ≤3 wt.% silicon, alternatively >0 wt.% or ≥1 wt% to ≤1 wt.% or ≤2 wt.% silicon. An exemplary composition has 85-90 wt.% diamond; 10-15 wt.% silicon carbide, and ≤2 wt.% silicon. The composition of the ceramic-bonded diamond composite can be determined by any suitable means. However, in this disclosure the compositions of ceramic-bonded diamond composite particles were determined by X-ray diffraction techniques using a Brucker AXS D8 Focus diffractometer using Cu k-alpha radiation and running Jade v.9.3.2 software, "Easy Quantitative" analysis method. The ceramic-bonded diamond composite particle 10 has a particle size of from 40 microns to 500 microns.

The diamond particles can be any suitable diamond particle that is of sufficiently small size that it will mix with the other constituent raw materials prior to forming the ceramic-bonded diamond composite particle. Diamond size is measured using a Microtrac S3500 particle size analyzer running software version 10.6.2 and are reported using volume averaging. Typical sizes of the diamond particles range from 200 microns or less to 1 micron or less (based on D50). In an alternative embodiment, the diamond particles can have a bimodal size distribution. As an example, the diamond particles can have a bimodal size distribution with a first fraction having a D50 of 5 microns and a second faction having an D50 of 20 microns. Other size distributions such as tri-modal may also be used. Once the ceramic-bonded diamond composite particle is formed, the sizes of the diamond particles and any size distribution present in the raw materials are generally preserved in the formed ceramic-bonded diamond composite particle, but with a slight reduction in sizes and shift to smaller size distributions possible due to consumption of diamond and crushing that occurs in the manufacturing process.

An example of a suitable diamond grain is monocrystalline or polycrystalline diamond, i.e., diamond grains having a D50 of 100 microns or less. Another example of a suitable diamond is pitted diamond, i.e., diamond grains having a D50 of 100 microns or less, and containing more surface cutting points than a typical monocrystalline micron and polycrystalline diamond. The surface treatment in pitted diamond increases the surface area as compared to that in the untreated monocrystalline or polycrystalline diamond. Pitted diamond has increased cutting points that contribute to aggressive cutting properties. Furthermore, the higher surface area of pitted diamonds, if preserved through subsequent manufacturing, e.g., HPHT processing, may contribute to increased bonding between diamond and silicon carbide in the ceramic-bonded diamond composite particle. An example of a suitable pitted diamond is disclosed in US 8,182,562, and pitted diamond is commercially available from Diamond Innovations under the trade name HYPERION™.

The ceramic-bonded diamond composite particle disclosed herein can be produced by various methods. In general, the ceramic-bonded diamond composite particle is formed by a method that includes forming a diamond feedstock, processing the diamond feedstock in a consolidation process and, optionally, one or more pre- or post-consolidation processes.

Forming the diamond feedstock includes preparing a mixture of the raw material of the ceramic-bonded diamond composite particle. In general, the diamond feedstock includes diamond particles, silicon particles and optional inert materials.

The above diamond feedstock can be used directly or can be further processed prior to introduction to the consolidation process.

An example of a consolidation process is a high pressure high temperature (HPHT) process in which a pressure of about 2000-7500 MPa and a temperature of about 800-1600° C are maintained for time periods typically not exceeding 30 minutes. During this period, a reaction bonding process occurs in which the silicon reacts with the diamond to form silicon carbide between diamond particles. The silicon carbide acts as a reactive bond and is the structure that holds the ceramic-bonded diamond composite particle together. HPHT processes yield a densified compact with densities greater than 95% and typically approaching 100%. Other details and suitable HPHT processes are disclosed in U.S. Pat. Nos. 3,141,746; 3,745,623; 3,609,818; 3,850,591; 4,394,170; 4,403,015; 4,797,326 and 4,954,139.

Another example of a consolidation process is sintering at 1300-1600° C, alternatively about 1500° C, in a controlled atmosphere. Controlled atmosphere for sintering in these consolidation processes are typically an inert or reducing atmosphere, such as argon, hydrogen, nitrogen, or a mixture of argon, hydrogen and/or nitrogen or a vacuum. During sintering, the diamond particles and silicon particles from the feedstock undergo a reaction bond to form silicon carbide between diamond particles. The silicon carbide acts as a reactive bond and is the structure that holds the ceramic-bonded diamond composite particle together. Because sintering is typically done at pressures much lower than that in HPHT processes, sintering does not result in the same degree of densification as observed in HPHT processes, with typical densification of sintered material being on the order of 50-75%, alternatively about 65%.

The consolidation process can be accompanied by one or more pre- or post-consolidation processes. For example, a pre-consolidation process can incorporate pressing, such as cold isostatic pressing, to form a green body of an initial densification that is then subject to the consolidation process. In exemplary embodiments, cold isostatic pressing achieves an initial densification of approximately 50-75%, alternatively at least 65%. In another example, a debinding process can be included either with the consolidation process or as a separate pre-consolidation process. Non-limiting examples of pre- and post-consolidation processes include coating with inert materials, metal alloys or compounds; secondary heating processes to pre-densify and/or improve the strength of green bodies; freezing particles; and removing water or volatile components from particles, for example in a freeze-drying process or spray drying process.

Also in general, the ceramic-bonded diamond composite particle is formed by a method that may optionally include an additive or a processing step that reduces the number and extent of diamond to silicon carbide bonding that occurs in the consolidation process. For example, an inert material can be included in the raw material, i.e., diamond particle and silicon particle mixture, prior to consolidation to reduce the extent of reaction bonding occurring in the consolidation process by displacing reactive material with inert material. In another example, an inert or active material can be partially coated on the granules of the raw material prior to the consolidation process to inhibit or prevent reaction bonding that would otherwise occur in the consolidation process. In a further example, a binder, such as polyethylene glycol (PEG), can be incorporated into the process and can assist with formation of green bodies formed by pressing techniques.

Examples of inert materials that can be used, alone or in combination, in the disclosed methods include oxides, carbides, nitrides, aluminates, silicates, nitrates, carbonates, silica (quartz) sand and cubic boron nitride (cBN). Specific examples of inert material include $Al_2O_3$, $SiO_2$, and SiC. When an inert material is used, the inert material has a D50 in the range of approximately 1 to 50 microns and is present in an amount of up to 10 weight percent (wt.%), alternatively 5 to 10 wt.%. It is presently believed that the inert material reduces the number and extent of reaction bonding in the densified compact. It is contemplated that the reduced network of reaction bonds results in the densified compact being friable into a plurality of ceramic-bonded diamond composite particles and having a reduced transverse rupture strength relative to a densified compact made without or below a threshold amount of inert material.

As a SiC bonded material, other active materials that form carbides can be used in addition to silicon in the ceramic bonded diamond composite. Examples of active materials include carbide forming metals such as Ti, Zr, and Cr. The addition of these active materials can result in the formation of active metal carbides other than SiC. These other carbides (TiC, ZrC, $Cr_2C_3$) can provide some binding effect but may be a lower strength bond than SiC, therefore reducing the strength of the densified compact. Active materials may be added in amounts preferably between 0 and 25% by weight. One or more of these active materials can be used.

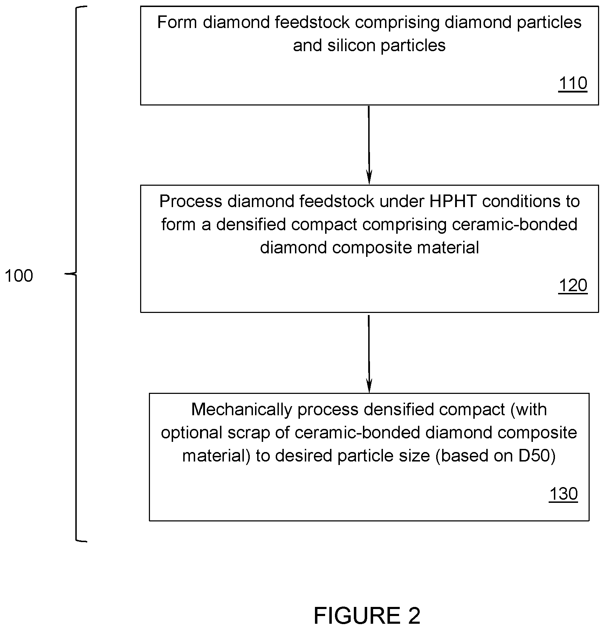

FIG. 2 illustrates a method to produce a ceramic-bonded diamond composite particle according to a first aspect. In the illustrated exemplary method 100, a diamond feedstock is formed 110, processed 120 under HPHT conditions to form a densified compact comprising ceramic-bonded diamond composite material, and mechanically processed 130 to a desired particle size.

The raw materials for the diamond feedstock can include any of the diamond material disclosed herein, including monocrystalline diamond, polycrystalline diamond, pitted diamond and combinations thereof, and silicon particles and optional silicon nitride, aluminum nitride, hexagonal boron nitride (hBN) and inert materials. Proportions of the constituents of the raw materials can be varied as variously disclosed herein to achieve a desired composition of the ceramic-bonded diamond composite particle to be produced.

Because the densified compact produced in step 120 is without inert filler materials, it has a density approaching 100% and a transverse rupture strength of over 900 MPa, mechanical processing, for example by mechanically breaking, is initially not desirable. Rather, the densified compact is first cut, for example by EDM, into smaller pieces prior to mechanical processing. Additionally or alternatively, excess material formed during the manufacture of products from densified compacts can be included with or be the sole source of densified compact comprising ceramic-bonded diamond composite material that is processed in the step of mechanically processing 130. Non-limiting examples of techniques to mechanically process the densified compact to a desired D50 size include grinding, roller milling, roll compaction milling, hammer milling, cutting, compact milling, jet milling and ball milling. Typical desired particle sizes range from 35 to 100 microns ($\mu$m), alternatively $\geq$50 $\mu$m to $\leq$40 $\mu$m or $\leq$50 $\mu$m or $\leq$70 $\mu$m or $\leq$80 $\mu$m.

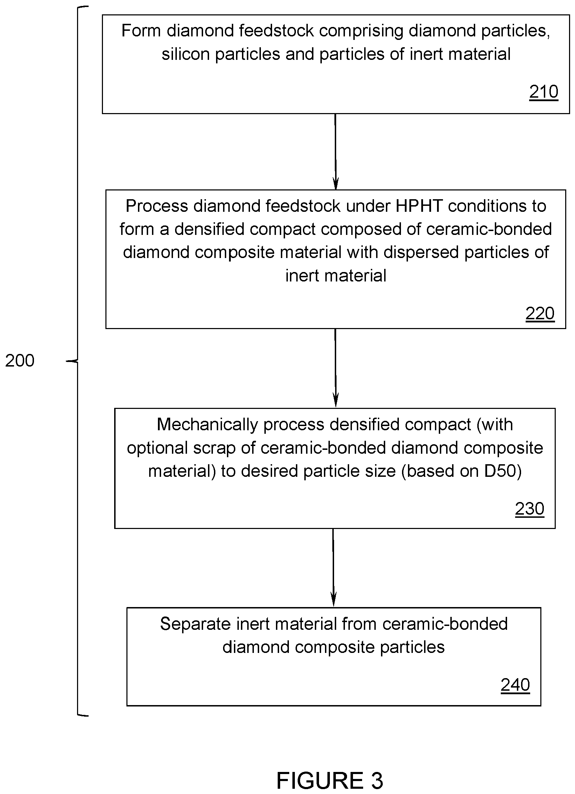

FIG. 3 is a graphical representation of another method to produce a ceramic-bonded diamond composite particle according a second aspect. In the illustrated exemplary method 200, a diamond feedstock is formed 210 that includes inert materials, is processed 220 under HPHT conditions to form a densified compact comprising ceramic-bonded diamond composite material with dispersed particles of inert material, and is mechanically broken 230 to a desired particle size. Subsequently, the inert material is separated from the ceramic-bonded diamond composite particles 240.

The raw materials for the diamond feedstock can include any of the diamond material disclosed herein, including monocrystalline diamond, polycrystalline diamond, pitted diamond and combinations thereof, silicon particles and optional particles of silicon nitride and inert materials, such as any of the inert materials disclosed herein including, in a specific example, 5 to 10 wt.% of one or more of sand, $Al_2O_3$, $SiO_2$ and SiC, where the inert material has a D50 of 1 to 50 microns. Proportions of the constituents of the raw materials can be varied as variously disclosed herein to achieve a desired composition of the ceramic-bonded diamond composite particle to be produced.

In contrast to the densified compact produced in the method 100 illustrated in FIG. 2, the densified compact produced in the method 200 illustrated in FIG. 3 is friable as a result of the inert material dispersed within the densified compact. Here, the inert material reduces the number and extent of diamond-to-silicon carbide bonding that form in the consolidation process, e.g., in the HPHT process in step 220. The inert material introduces a number of internal material flaws which act as stress concentration sites and reduce the failure load of the densified compact, allowing it to be broken using lower applied forces. This densified compact can then be processed in the step of mechanically processing 230. Non-limiting examples of techniques to mechanically process the densified compact to a desired particle size include grinding, roller milling, roll compaction milling, hammer milling, cutting, compact milling, jet milling and ball milling. Because of the inclusion of inert material in the diamond feedstock, the energy required to mechanically process the densified compact to form a plurality of ceramic-bonded diamond composite particles is reduced. Furthermore, if sufficient inert material is used, the densified compact is unstable and, in extreme cases, does not hold the shape formed in the consolidation step. Rather, the densified compact spalls into separate particles of ceramic-bonded diamond composite material or into agglomerates of particles of ceramic-bonded diamond composite material. Spalling or other particle formation can be mechanically accelerated. Typical particle sizes range from 35 to 100 microns ($\mu$m), alternatively $\geq$50 $\mu$m to $\leq$40 $\mu$m or $\leq$50 $\mu$m or $\leq$70 $\mu$m or $\leq$80 $\mu$m.

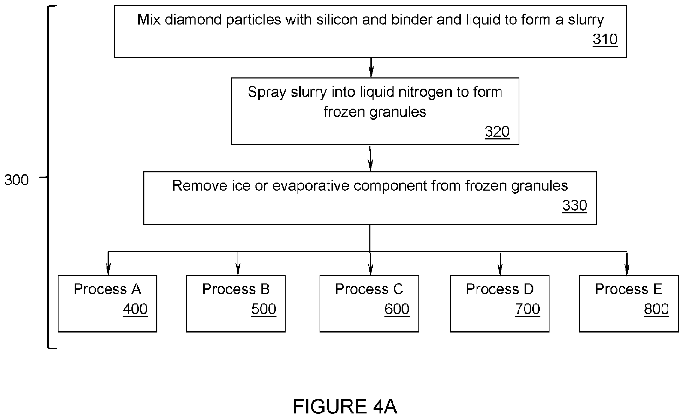

FIG. 4A is a graphical representation of a further method to produce a ceramic-bonded diamond composite particle according to a third aspect and including alternative and optional processes. The illustrated exemplary method 300 is a freeze granulation process in which diamond particles, silicon particles, silicon nitride particles and binder are mixed with a liquid, such as water, into a slurry 310 and processed through a series of granulation steps, e.g., processes 320 to 330, to form a granule to be used in any one of the further Processes A to E. General characteristics of the granule include a porous body (about 40 % porosity), average sphericity of $\geq$0.8, alternatively having an average sphericity between $\geq$0.85 or $\geq$0.9 or $\geq$0.95 and $\leq$1.0, and diameter ranged from 25 $\mu$m to 2 mm, alternatively from 50 $\mu$m to 700 $\mu$m.

In the granulation steps 310 to 330, a slurry is formed and processed to form granule. The raw materials for the slurry can include any of the diamond material disclosed herein, including monocrystalline diamond, polycrystalline diamond, pitted diamond and combinations thereof, silicon particles, a solvent, and a binder. The binder can be any suitable binder that promotes the flow characteristics or spray characteristics suitable for the further processing steps while also being useful to promote sintering and green body formation as those alternative processes will be applied in the method. For example, a suitable binder can be selected from the group consisting of polyethylene glycol (PEG), polyvinyl alcohol (PVA), and paraffin wax and others. The solvent may be water, ethanol, acetone, or others chosen for compatibility with different binders and slurry processing systems. An example slurry composition includes, by weight, 66% diamond particles, 7.3% silicon powder, 1.5% PVA 4-88, 0.5% PEG 400, and 24.7% water; alternatively, the amounts and molecular weights of the binders can vary. Proportions of the constituents of the raw materials for the slurry can be varied as variously disclosed herein to achieve a desired composition of the ceramic-bonded diamond composite particle to be produced.

The slurry is processed to form a solidified granule. As identified in FIG. 4A, an example process 320 is spraying the slurry into liquid nitrogen, which will freeze the droplets of the spray to form frozen granules. Such frozen droplets tend to form spherical granules. It is contemplated that the spherical granules can be substantially rounded and have an average sphericity of $\geq$0.8, alternatively having an average sphericity between $\geq$0.85 or $\geq$0.9 or $\geq$0.95 and $\leq$1.0.

The recovered granules are then processed 330 to remove water or other volatile components. In a first example process, water is removed from the recovered granule by a freeze drying process.

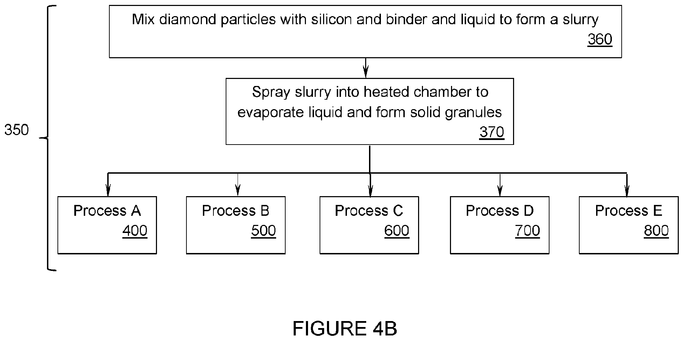

FIG 4B is a graphical representation of another method to produce a ceramic-bonded diamond composite particle according to a fourth aspect and including alternative and optional processes. The illustrated exemplary method 350 is a spray dry granulation process in which diamond particles, silicon particles and binder are mixed with a liquid, such as water, into a slurry 360 and processed through a granulation step, e.g., process 370, to form a granule to be used in any one of the further Processes A to E. General characteristics of the granule include a porous body (about 25% porosity) (which will generally have a lower porosity than for the same composition processed via the freeze granulation process), average sphericity of ≥0.8, alternatively having an average sphericity between ≥0.85 or ≥0.9 or ≥0.95 and ≤1.0, and diameter ranged from 1 μm to 2 mm, alternatively from 25 μm to 250 μm.

In the granulation steps 360 to 370, a slurry is formed and processed to form granule. The raw materials for the slurry can include any of the diamond material disclosed herein, including monocrystalline diamond, polycrystalline diamond, pitted diamond and combinations thereof, silicon particles, a solvent, and a binder. The binder can be any suitable binder that promotes the flow characteristics or spray characteristics suitable for the further processing steps while also being useful to promote sintering and green body formation as those alternative processes will be applied in the method. For example, a suitable binder can be selected from the group consisting of polyethylene glycol (PEG), polyvinyl alcohol (PVA), and wax. The solvent may be water, ethanol, acetone, or others chosen for compatibility with different binders and slurry processing systems. An example slurry composition includes, by weight, 66% diamond particles, 7.3% silicon powder, 1.5% PVA 4-88, 0.5% PEG 400, and 24.7% water. Proportions of the constituents of the raw materials for the slurry can be varied as variously disclosed herein to achieve a desired composition of the ceramic-bonded diamond composite particle to be produced.

The slurry is processed to form a solidified granule. As identified in FIG. 4B, an example process 360 is a spray drying process that includes spraying the slurry into a heated environment, e.g., a heated chamber heated to about 200° C inlet temperature (although the temperature can vary depending on the solvent being evaporated and many other factors including, for example, solids loading), which will remove any evaporative components and liquids in the slurry and will form granules that can then be recovered for further processing. Examples of volatile components include volatile components from the slurry such as any solvents discussed above. Granules tend to form spherical granules. It is contemplated that the spherical granules can be substantially rounded and have an average sphericity of ≥0.8, alternatively having an average sphericity between ≥0.85 or ≥0.9 or ≥0.95 and ≤1.0.

The granules from process 330 (FIG. 4A) and process 370 (FIG. 4B) can be used as input (or feedstock) to a pre-consolidation process. In the exemplary processes illustrated in FIGS. 4A and 4B, there are multiple pre-consolidation processes (Process A to Process E) that can be used independently or in combination.

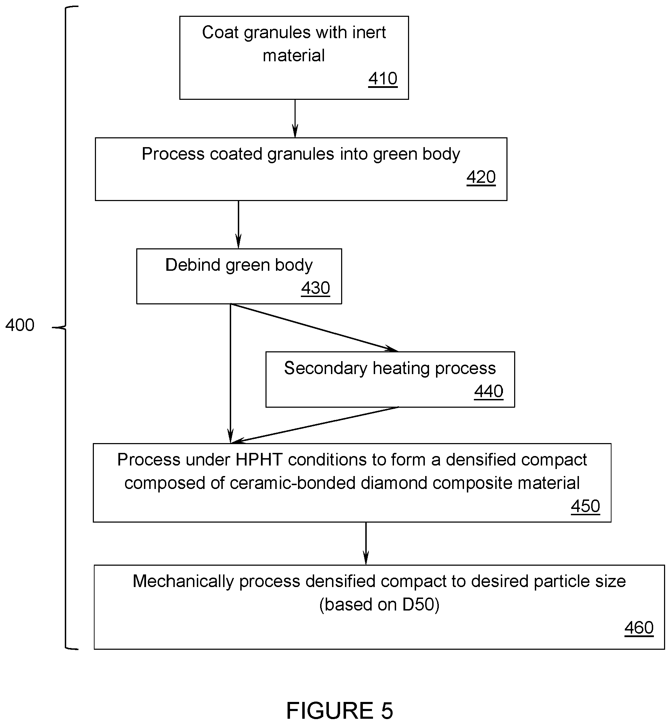

Process A 400 is shown in FIG. 5, which incorporates a first pre-consolidation process. In Process A, recovered granules are coated with an inert material 410 and then processed into a green body 420. Coating with an inert material 410 includes coating with non-reactive materials, metal alloys or compounds and the coating can inhibit or prevent reaction bonding that would otherwise occur in the later consolidation process, thus increasing the friability of the product. Forming a green body 420 involves pressing the recovered granules (and any coatings and additional constituents including any inert and binder materials) to a desired shape using, for example, cold isostatic pressing or other suitable molding technology. Subsequently, the green body is debinded 430 by, for example, heating to 450° C in a hydrogen atmosphere for sufficient time to drive off the binder materials. The debinded green body can be optionally further heated in a secondary heating process 440 at, for example, 1000° C to 1500° C to improve the strength of the green body.

Following pre-consolidation, material enters consolidation processing. For example, a consolidation process can incorporate HPHT processes that form a densified compact composed of ceramic-bonded diamond composite material 450. However, the materials, techniques and processes used prior to the consolidation process promote friability of the densified compact post-HPHT. Thus, the densified compact can be further processed to ceramic-bonded diamond composite particles by mechanically processing the densified compact to a desired size 460. Non-limiting examples of techniques to mechanically process the densified compact to a desired size include grinding, roller milling, roll compaction milling, hammer milling, cutting, compact milling, jet milling and ball milling. Typical desired particle sizes range from 35 to 100 microns (μm), or ≥50 μm to ≤40 μm or ≤50 μm or ≤70 μm or ≤80 μm.

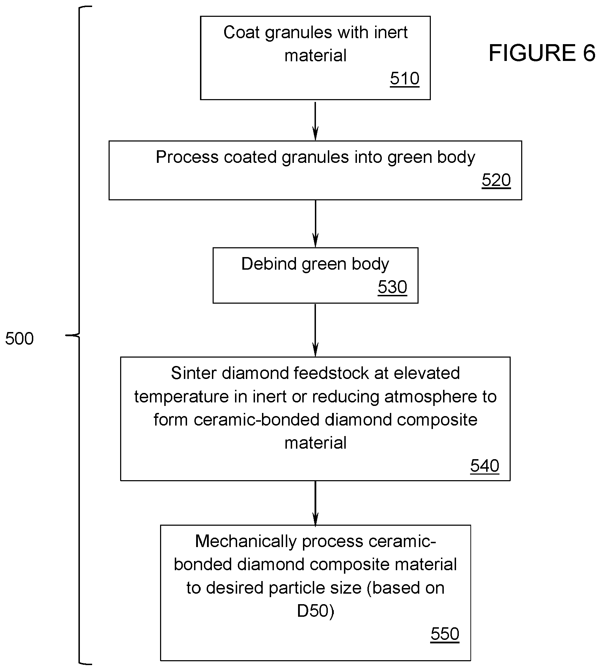

Process B 500 is shown in FIG. 6, which incorporates a second pre-consolidation process. In Process B, recovered granules are coated with an inert material 510 and then processed into a green body 520. Coating with an inert material 510 includes coating with non-reactive materials, metal alloys or compounds and the coating can inhibit or prevent reaction bonding that would otherwise occur in the later consolidation process, thus increasing the friability of the product. Forming a green body 520 involves pressing the recovered granules and any coatings (and additional constituents including any inert and binder materials) to a desired shape using, for example, cold isostatic pressing or other suitable molding technology. Subsequently, the green body is debinded 530 by, for example, heating to 450° C in a hydrogen atmosphere for sufficient time to drive off the binder materials. The debinded green body is then introduced into a sintering process 540 to form a ceramic-bonded diamond composite material and then mechanically processed into ceramic-bonded diamond composite particles of a desired particle size 550 and recovered. Non-limiting example details of the sintering process include processing at pressures between 0 and 75 kbar (0 to 1.5 GPa) and temperatures between 800° C and 1600° C, with a dwell time at maximum temperature between 1 and 60 minutes. One exemplary process may be conducted at 30 kbar (3 GPa), 1500° C, with a dwell time at maximum temperature of 15 minutes. Sintering can occur in an inert or reducing atmosphere. Non-limiting examples of techniques to mechanically process the densified compact to a desired particle size include grinding, roller milling, roll compaction milling, hammer milling, cutting, compact milling, jet milling and ball milling. Typical desired particle sizes range from 35 to 100 microns ($\mu$m), or ≥50 $\mu$m to ≤40 $\mu$m or ≤50 $\mu$m or ≤70 $\mu$m or ≤80 $\mu$m.

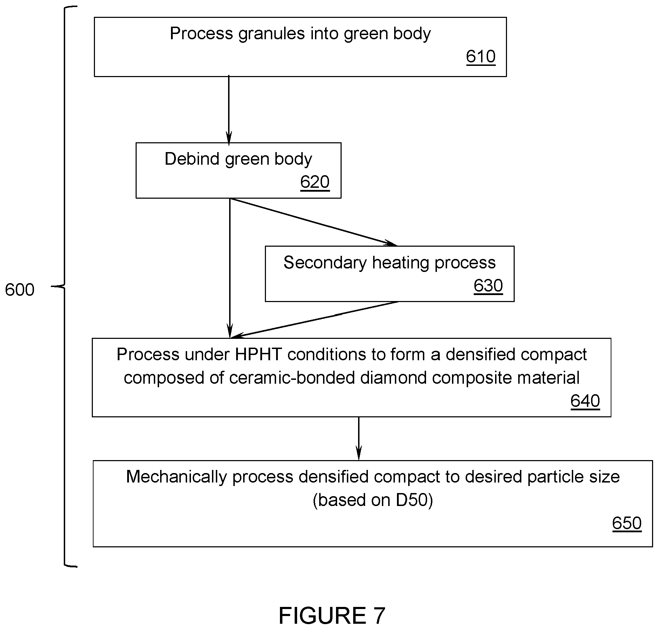

Process C 600 is shown in FIG. 7, which incorporates a third pre-consolidation process. In Process C, recovered granules are processed into a green body 610. The granules can be recovered from process 330 and can processed to include additions of silicon particles, diamond particles and, optionally, inert material that has not been processed through the slurry and evaporative processes. As in the original mixture, the types and amounts of constituents added can be varied as variously disclosed herein to achieve a desired composition of the ceramic-bonded diamond composite particle to be produced. Forming the green body 610 involves pressing the recovered granules (and any coatings and additional constituents including any inert and binder materials) to a desired shape using, for example, cold isostatic pressing or other suitable molding technology. Subsequently, the green body is debinded 620 by, for example, heating to 450° C in a hydrogen atmosphere for sufficient time to drive off the binder materials. The debinded green body can be optionally further heated in a secondary heating process 630 at, for example, 1000° C to 1500° C to improve the strength of the green body.

Following pre-consolidation, material enters consolidation processing. For example, a consolidation process can incorporate HPHT processes that form a densified compact composed of ceramic-bonded diamond composite material 640. However, the materials, techniques and processes used prior to the consolidation process promote friability of the densified compact post-HPHT. Thus, the densified compact can be further processed to ceramic-bonded diamond composite particles by mechanically processing the densified compact to a desired size 650. Non-limiting examples of techniques to mechanically process the densified compact to a desired size include grinding, roller milling, roll compaction milling, hammer milling, cutting, compact milling, jet milling and ball milling. Typical desired particle sizes range from 35 to 100 microns ($\mu$m), alternatively ≥50 $\mu$m to ≤40 $\mu$m or ≤50 $\mu$m or ≤70 $\mu$m or ≤80 $\mu$m.

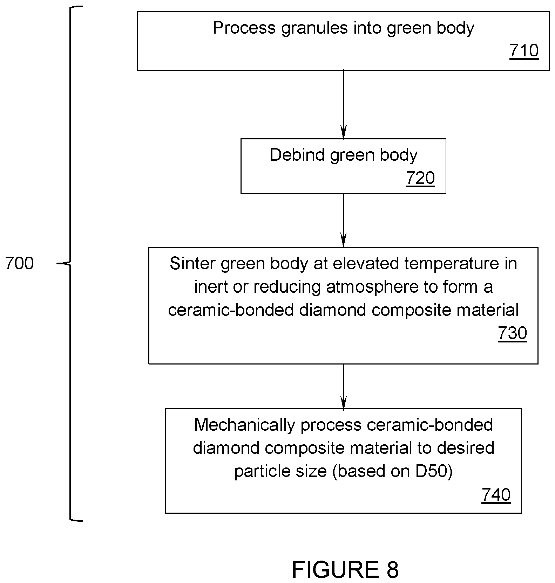

Process D 700 is shown in FIG. 8, which incorporates a fourth pre-consolidation process. In Process D, recovered granules are processed into a green body 710. The granules can be used directly as recovered from process 330 as well as can be processed to include additions of silicon particles, diamond particles and, optionally, inert material that has not been processed through the slurry and evaporative processes. As in the original mixture, the types and amounts of constituents added can be varied as variously disclosed herein to achieve a desired composition of the ceramic-bonded diamond composite particle to be produced. Forming a green body 710 involves pressing the recovered granules (and any coatings and additional constituents including any inert and binder materials) to a desired shape using, for example, cold isostatic pressing or other suitable molding technology. Subsequently, the green body is debinded 720 by, for example, heating to 450° C in a hydrogen atmosphere for sufficient time to drive off the binder materials. The debinded green body is then processed in a sintering process 730 to form a ceramic-bonded diamond composite material and then mechanically broken into ceramic-bonded diamond composite particles of a desired size 740 and recovered. Non-limiting example details of the sintering process include processing at pressures between 0 and 75 kbar (0 and 7.5 GPa) and temperatures between 800° C and 1600° C, with a dwell time at maximum temperature between 1 and 60 minutes. One exemplary process may be conducted at 30 kbar (3 GPa), 1500° C, with a dwell time at maximum temperature of 15 minutes. Sintering can occur in an inert or reducing atmosphere. Non-limiting examples of techniques to mechanically process the densified compact to a desired size include grinding, roller milling, roll compaction milling, hammer milling, cutting, compact milling, jet milling and ball milling. Typical desired particle sizes range from 35 to 100 microns ($\mu$m), or ≥50 $\mu$m to ≤40 $\mu$m or ≤50 $\mu$m or ≤70 $\mu$m or ≤80 $\mu$m.

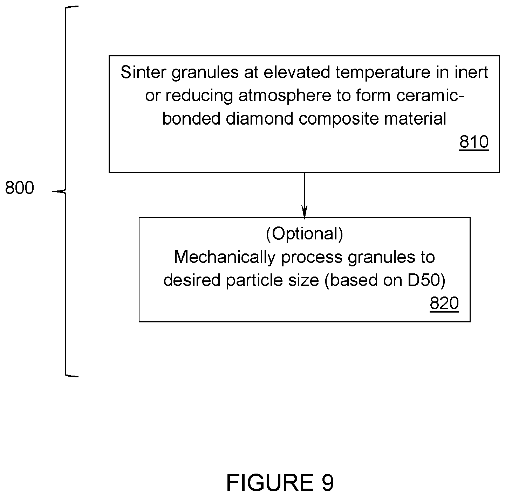

Process E 800 is shown in FIG. 9, which incorporates a fifth pre-consolidation process. In Process E, recovered granules are used directly in a sintering process 810 to form a ceramic-bonded diamond composite material and then (optionally) mechanically processed into ceramic-bonded diamond composite particles of a desired particle size 820 and recovered. The granules can be used directly as recovered from process 330 as well as can include additions of silicon particles, diamond particles and, optionally, inert material that has not been processed through the slurry and evaporative processes. As in the original mixture, the types and amounts of constituents added can be varied as variously disclosed herein to achieve a desired composition of the ceramic-bonded diamond composite particle to be produced. Non-limiting example details of the sintering process include processing under vacuum or an inert or reducing atmosphere and temperatures between 1450° C and 1800° C, with a dwell at maximum temperature between 1 and 120 minutes. Sintering can occur in an inert or reducing atmosphere. Non-limiting examples of techniques to mechanically process the densified compact to a desired particle size include grinding, roller milling, roll compaction milling, hammer milling, cutting, compact milling, jet milling and ball milling. Typical desired particle sizes range from 35 to 100 microns ($\mu$m), or ≥50 $\mu$m to ≤40 $\mu$m or ≤50 $\mu$m or ≤70 $\mu$m or ≤80 $\mu$m.

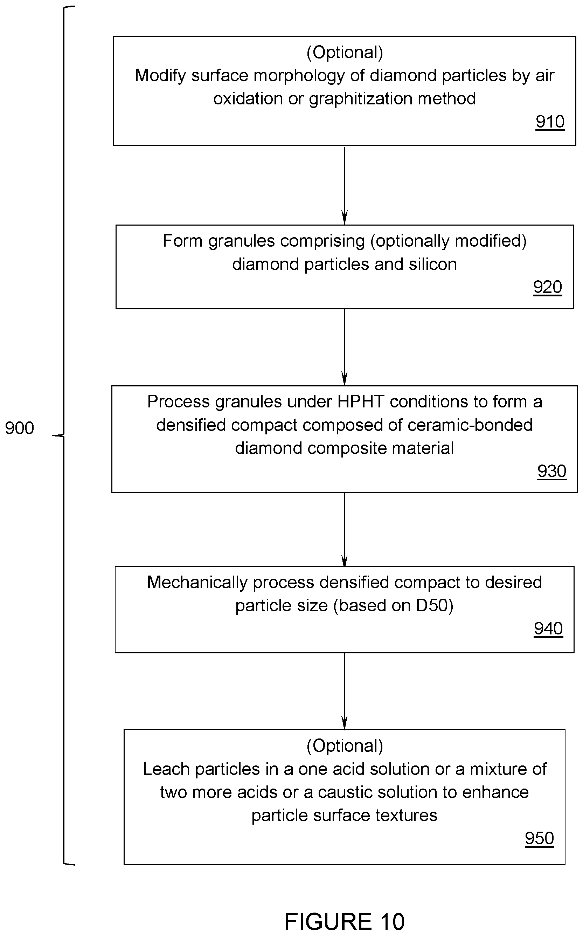

An optional process to modify the surface of the diamond particles - either prior to forming the ceramic-bonded diamond composite particles or after forming the ceramic-bonded diamond composite particles - can be incorporated into any of the disclosed methods. FIG. 10 is a graphical representation of an additional method to produce a ceramic-bonded diamond composite particle according to a fifth aspect in which an optional surface modification process is included as an additional or further process.

In the illustrated method 900, one optional surface modification process is to modify the surface morphology of diamond particles 910. Modifying the surface morphology of diamond particles can occur prior to forming or processing the granules as in any of the first process steps in Processes A to E. Air oxidation or graphitization methods can be used to achieve the surface modification. For example, a method of making granules may comprise the steps of treating a plurality of diamond particles at a pre-determined temperature, such as from about 550° C to about 900° C, at a pre-set atmosphere, such as flowing air or flowing oxygen, such that diamond particles form nano-scale or sub-micron surface texture. In another example, diamond can be coated with nickel or nickel alloy via an electroless coating method. The weight percentage of Ni or Ni alloy can vary from 5% to 60%. The coated diamond can be subjected to elevated heat treatment in a temperature range from 550° C to 1000° C under inert atmospheres or flowing forming gas which contains 2-5% hydrogen and 95-98% nitrogen. The dwell time for the heat treatment can be from 30 minutes to 10 hours to enable the diamond surface to convert back to graphite. As a result, the surface morphology of the diamond can be modified due to the back conversion and very rough surface textures exposed after cleaning out of the graphite.

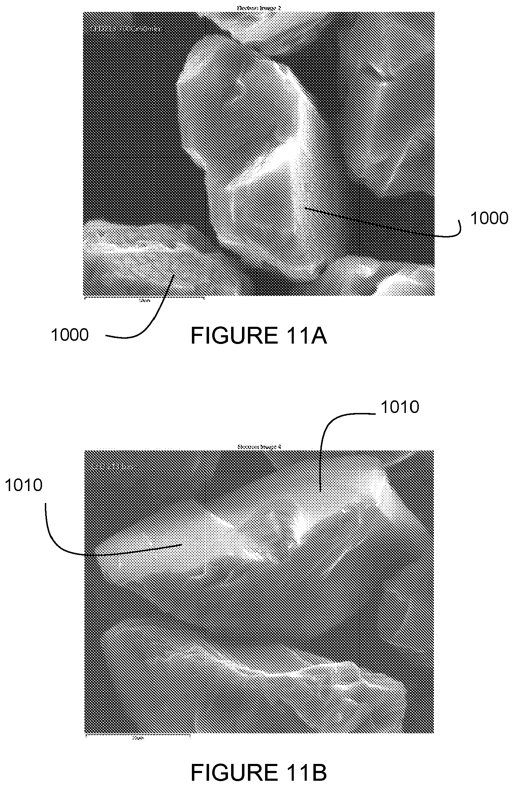

In a specific example, surface oxidation of the diamond particles having a D50 of 21.3 microns was conducted in a heated environment with flowing air (moisture content less than 1%). 30 grams of the diamond particles was loaded into a 10"x4" sized quartz crucible and distributed to evenly cover the entire bottom area of the crucible. The crucible was then inserted into the center of a tube furnace. The two ends of the furnace were sealed using flanges incorporating inlet and outlet ports. The inlet port was connected to a gas cylinder by a plastic tube and the outlet port was connected to a ventilation hood using a plastic tube. A regulator was equipped at the gas cylinder to control the air flow. A 5 PSI pressure air flow was pre-adjusted and supplied during the entire experiment. The power was turned on at a heater control unit and the temperature was set at 700° C with a ramp rate of 15° C per minute. The dwell time for this experiment was controlled for 1 hour. The heater power was shut off after the dwell time. The diamond particles were allowed to cool in the furnace for several hours under flowing air to a temperature of 100° C. The air flow was turned off and the seal flange at the outlet side opened and the crucible removed. The diamond particles were collected and weighed. In this experiment, the weight loss was around 10%. The oxidized diamond particles were further characterized using SEM. A SEM image of the surface oxidized diamond particle is shown in Fig. 11A and a SEM image of a diamond particle prior to surface oxidation is shown in Fig. 11B. The surface of the surface oxidized diamond particle in FIG. 11A has a different surface texture from the untreated diamond particle seen in Fig. 11B. The surface textures in the surface oxidized diamond particle in FIG. 11A are characterized by surface features 1000 that are in the nanometer scale or submicron scale. In contrast, surfaces 1010 in the untreated diamond particle seen in Fig. 11B do not have a surface texture and are substantially smooth. The surface modified diamond particles were incorporated into the granules in some of the embodiments of the present invention. Examples, techniques and parameters related to oxidation methods for diamond particles are disclosed U.S. Patent Application S/N. 14/194086.

In the illustrated method 900, granules are formed using the (optionally modified) diamond particles and silicon 920. These granules are then processed under HPHT conditions to form a densified compact composed of ceramic-bonded diamond composite material 930 and then mechanically processed to a desired particle size 940. Processing into the granules, HPHT processing and mechanical processing can be by any of the methods disclosed herein in Processes A to E for such processes.

In the illustrated method 900, another optional surface modification process 950 can occur on the ceramic-bonded diamond composite particle after the particles are formed in the mechanical processing step as in any of the Processes A to E. In this optional process 950, the surface of the particle can be textured by exposure to one or more chemicals or chemical solutions that will preferentially dissolve or otherwise erode portions of the particle to increase the surface area or porosity of the particle, which is beneficial in that the increased surface area or porosity in the produced particle increases in the number of cutting points and contributes to aggressive cutting properties for the particle. Leaching is an example of this optional surface modification process 950. Examples of suitable leaching process include contacting or submerging a portion or all of the particle in a solution comprising one or more acids, such as sulfuric acid and nitric acid, or in a caustic solution, such as sodium hydroxide or potassium hydroxide or a mixture of both. For ceramic-bonded diamond composite particles having an average diameter of 40 to 100 microns, the particles can be submerged in a leaching solution for up to 72 hours at room temperature (or shorter period of time at elevated temperatures and/or pressures).

For example, unreacted silicon (or other active material) and unreacted carbon can be dissolved in the leaching process, which results in micropores on the surface. In a sulfuric acid and nitric acid solution with a combination ratio of 1:1, leaching can take up to 72 hours at room temperature. In the same solution, at elevated temperature of 200° C, leaching can take about 1-5 hours. In either sodium hydroxide or potassium hydroxide or both at a ratio of 1:1, which is a molten caustic mixture, leaching can take about less than 1 hour at a temperature of 300° C. Recovery of the diamond composite particles can include rinsing in deionized water for multiple cycles in order to remove residual acids or caustic chemicals.

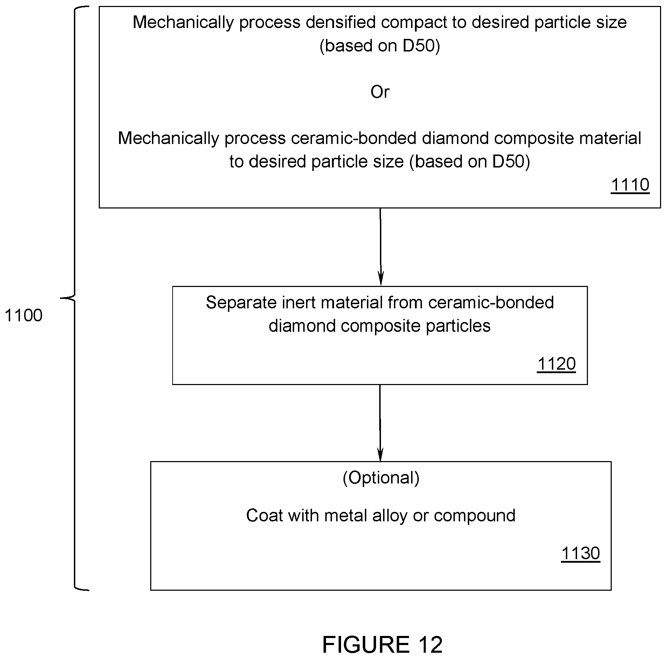

An optional coating step can be incorporated into any of the disclosed methods. FIG. 12 is a graphical representation of another additional method 1100 to produce a ceramic-bonded diamond composite particle according to a sixth aspect in which an optional coating process 1130 is included as a further process after forming the ceramic-bonded diamond composite particles in any one of the methods disclosed herein in Processes A to E (such as after the step of mechanically processing densified compacts to desired particle sizes or mechanically processing ceramic-bonded diamond composite material to desired particles sizes 1110 and recovering the ceramic-bonded diamond composite particles by separating the inert material from the ceramic-bonded diamond composite particles 1120). The coating can be a metal alloy or compound. For example, metals such as Ni, Cr, Cu, Ti, Ag, as well as their alloys can be coated on the diamond composite particles for metal bond or resin bond wheels. Metal compounds such as TiC, or SiC can be coated on the diamond composite particles for metal bond or glass bond wheels application. These coatings improve the retention of the particles in the bond matrix and result in increased wheel life.

In each of the methods disclosed herein, after the densified compact is mechanically broken to the desired particle size, the inert material can be separated and the resulting ceramic-bonded diamond composite particles can be collected for further use, for example, for further use in manufacturing products for wear applications, particularly where high thermal stability is desirable. Examples of such products include grinding wheels, saw blades, dicing blades, lapping compounds, polishing compounds.

It should be noted that the raw materials, in particular, the raw materials present in the consolidation process, are not contemplated to include cobalt or other refractory metals that are known to promote diamond-to-diamond bonding under HPHT processing conditions. Further, the diamond-to-diamond bonding is relatively stronger than the reaction bonded silicon carbide and would, therefore, be more likely to remain intact than the otherwise friable reaction bonded silicon carbide.

A quantitative measure of the contribution to the friability of the densified compact of inert material and the disclosed processing can be determined based on measuring the transverse rupture strength (TRS) (reported on a force per unit area basis) of the densified compact. Compacts from each of the processes 100, 200 and A-E were manufactured as disclosed herein. TRS was measured using an Instron 5800R universal testing machine and a 3-point bending test on a test bar (prepared from the densified compacts) measuring 30mm length x 3mm height x 4mm width performed at room temperature, using a crosshead displacement rate of 2.54 mm/min and a test fixture span of 20mm, and load versus crosshead displacement recorded. The highest point of the load-displacement curve was used to calculate the TRS by the following relationship:

$$TRS = 1.5 * \left[ \frac{(P * I)}{(h^2 * b)} \right]$$

where P = maximum load, I is the test fixture span, h is the test bar height, and b is the test bar width. The values for TRS for various processes disclosed herein are reported in Table 1.

TABLE 1 - Average transverse rupture strength (TRS) (+/- 1 standard deviation) of densified compact produced in the identified process

| Process | Transverse Rupture Strength of densified compact (in MPa) |
|---|---|
| Process 100 | 949 (+/- 48) |

The toughness of the diamond composite particles, as measured by a standard friability test, may be a factor in abrasion performance. The friability test involves ball milling a quantity of product under controlled conditions and sieving the residue to measure the particle size reduction of the product. The toughness index (TI) is measured at room temperature and a score of 100 is the highest toughness of the crystal. In many cases the tougher the crystal, the longer the life of the crystal in a grinding or machining or dicing tool and, therefore, the longer the life of the tool. This leads to less tool wear and, ultimately, lower overall tool cost.

The ceramic diamond composite particles may be graded by size according to ASTM specification EI 1-09, entitled "Standard Specification for Wire Cloth and Sieves for Testing Purposes." Table 2 lists toughness index data of the ceramic diamond composite particles in a size range from mesh size 40/50 (400 micron) to mesh size 400/500 (35 micron). The ceramic diamond composite particles were made by the various process disclosed herein, as indicated in the header to each column. Thus, for, example, ceramic diamond composite particles made from process 100 were made by crushing and milling HPHT sintered composite blanks without inert material followed by sieving into various mesh sizes.

| Mesh Size | Toughness Index (TI) for ceramic-bonded diamond composite particles recovered from indicated process |
|---|---|
| | Process 100 |
| 170/200 | 74 |
| 200/230 | 68 |
| 230/270 | 65 |
| 270/325 | 62 |
| 325/400 | 64 |
| 400/500 | 66 |

**Claims**

1. A method to produce ceramic-bonded diamond composite particles, the method comprising:

   forming a diamond feedstock including a plurality of diamond grains and silicon particles;
   subjecting the diamond feedstock to at least one pre-consolidation process to form a granule;
   forming a densified compact in a consolidation process using the granule, the densified compact including ceramic-bonded diamond composite material, and
   mechanically processing the densified compact in a post-consolidation process in which a plurality of ceramic-bonded diamond composite particles are formed,
   wherein the ceramic-bonded diamond composite particles include a plurality of diamond grains and silicon carbide reaction bonded to the diamond grains, and
   wherein a composition of the ceramic-bonded diamond composite particle includes 60-90 wt.%, preferably 70-90 wt.%, more preferably 79-81 wt.%, more preferably 80 wt.% diamond, 10-40 wt.% silicon carbide, $\leq 2$ wt.% silicon, wherein the ceramic-bonded diamond composite particles have a mesh size of between 400 micron (40/50) and 35 micron (400/500) and a toughness index of between 40 and 100 as measured at room temperature using a standard friability test that involves ball milling a quantity of product under controlled conditions and sieving the residue to measure particlesize reduction, where 100 is the highest toughness.

2. The method according to claim 1, wherein the diamond feedstock includes the plurality of diamond grains, silicon particles, and an inert material.

3. The method according to claim 1, further comprising:

   mixing the diamond feedstock with a binder and a liquid solvent to form a slurry;
   processing the slurry to form solidified granules; and
   processing solidified granules using the at least one pre-consolidation process, wherein the at least one pre-consolidation process includes:

      forming a green body, the green body including the solidified granules, and
      driving off binder material to debind the green body.

4. The method according to claim 3, wherein processing the slurry to form solidified granules includes spraying the slurry into liquid nitrogen to form a plurality of frozen granules followed by freeze drying the frozen granules to remove solvent from the solidified granules.

5. The method according to claim 3, wherein processing the slurry to form solidified granules includes spray drying the slurry in a heated environment to form a solid, solvent-free granule.

6. The method according to claim 3, wherein the solidified granules are coated with an inert material prior to forming the green body.

7. The method according to claims 3 or 6, including a secondary heating process, wherein the debinded green body is heated to 1000° C to 1600° C to improve the strength of the debinded green body.

8. The method as in any one of claims 1, 3 and 6. wherein the consolidation process is a HPHT process.

9. The method according to claims 2 or 6, wherein the inert material is selected from the group consisting of oxides, carbides, nitrides, aluminates, silicates, nitrates, and carbonates.

10. The method according to claim 2, wherein the inert material has a particle size (based on D50) in the range of 1 to 100 microns and is present in an amount of 1 to 10 weight percent (wt.%).

11. The method according to claims 2 or 6, wherein the inert material is cubic boron nitride (cBN).

12. The method according to claims 2 or 6, wherein the inert material is selected from the group consisting of $Al_2O_3$, $SiO_2$, and SiC and wherein the inert material has a particle size (based on D50) in the range of 1 to 50 microns and is present in an amount of 1 to 10 weight percent (wt.%).

13. A method to produce ceramic-bonded diamond composite particles, the method comprising :

    forming a diamond feedstock including a plurality of diamond particles and silicon particles;
    mixing the diamond feedstock with a binder and a solvent to form a slurry,
    spraying the slurry into liquid nitrogen to form a plurality of frozen granules followed by freeze drying the frozen granule to remove the solvent from the granule or spraying the slurry into a heated chamber to remove volatile components;
    heating the granule in an inert or reducing atmosphere to remove the binder from the granule
    sintering the porous granule in an inert or reducing atmosphere to form a grit of ceramic-bonded diamond composite material; and
    mechanically processing the grit to form a plurality of ceramic-bonded diamond composite particles,
    wherein the ceramic-bonded diamond composite particles include a plurality of diamond particles and silicon carbide reaction bonded to the diamond particles,
    wherein a composition of the ceramic-bonded diamond composite particle includes 60-90 wt.%, preferably 70-90, more preferably 79-81 wt.%, more preferably 80 wt.% diamond, 10-40 wt.% silicon carbide, ≤2 wt.% silicon, wherein the ceramic-bonded diamond composite particles have a mesh size of between 400 micron (40/50) and 35 micron (400/500) and a toughness index of between 40 and 100 as measured at room temperature using a standard friability test that involves ball milling a quantity of product under controlled conditions and sieving the residue to measure particlesize reduction, where 100 is the highest toughness.

14. The method according to claim 13, further comprising a secondary heating process, wherein the debinded green body is heated to 1000° C to 1600° C to improve the strength of the debinded green body.

15. A method to produce ceramic-bonded diamond composite particles, the method comprising :

    forming a diamond feedstock including a plurality of diamond grains and silicon particles and particles of inert material;
    subjecting the diamond feedstock to a consolidation process that forms a densified compact including ceramic-bonded diamond composite material from the diamond feedstock;
    subjecting the densified compact to a post-consolidation process in which the densified compact is mechanically processed to form a plurality of ceramic-bonded diamond composite particles; and
    separating particles of inert material from the plurality of ceramic-bonded diamond composite particles,
    wherein the ceramic-bonded diamond composite particles include a plurality of diamond grains and silicon carbide reaction bonded to the diamond grains,
    wherein a composition of the ceramic-bonded diamond composite particle includes 60-90 wt.%, preferably 79-81 wt.%, more preferably 80 wt.% diamond, 10-40 wt.% silicon carbide, ≤2 wt.% silicon, and
    wherein the ceramic-bonded diamond composite particle has a mesh size of 400 micron (40/50) to 35 micron (400/500) and a toughness index of 40 to 100 as measured at room temperature using a standard friability test that involves ball milling a quantity of product under controlled conditions and sieving the residue to measure particle size reduction, where 100 is the highest toughness.

16. The method as in any one of claims 1, 3, 13 and 15, further comprising modifying a surface morphology of the plurality of diamond grains prior to forming the diamond feedstock or leaching the plurality of ceramic-bonded diamond composite particles, wherein leaching includes contacting the ceramic-bonded diamond composite particles with acids such as nitric acid and sulfuric acid, or caustic chemicals such as sodium hydroxide or potassium hydroxide.

17. The method of claim 16, wherein modifying the surface morphology includes modification by oxidation or graphitization.

18. The method as in any one of claims 1, 3, 13 and 15, further comprising coating the plurality of ceramic-bonded diamond composite particles with a metal alloy or compound.

19. Ceramic-bonded diamond composite particles, comprising:

a plurality of diamond grains; and
silicon carbide reaction bonded to the diamond grains;
wherein the ceramic-bonded diamond composite particle has a mesh size 400 micron (40/50) to 35 micron (400/500) and a toughness index from 40 to 100 as measured at room temperature using a standard friability test that involves ball milling a quantity of product under controlled conditions and sieving the residue to measure particle size reduction, where 100 is the highest toughness; and
wherein a composition of the ceramic-bonded diamond composite particle includes 70-90 wt.%, preferably 79-81 wt.%, more preferably 80 wt.% diamond, 10-30 wt.% silicon carbide, ≤2 wt.% silicon.

20. The ceramic-bonded diamond composite particle according to claim 19, wherein the diamond grains have a bimodal size distribution with a first fraction having a D50 of about 5 microns and a second fraction having a D50 of about 20 microns.

21. The ceramic-bonded diamond composite particles according to claim 19, wherein the aspect ratio of the composite particles ranges from 1.2 to 5.

22. The ceramic-bonded diamond composite particle according to claim 19, wherein the diamond grain is monocrystalline or polycrystalline diamond.

**Patentansprüche**

1. Verfahren zur Herstellung keramisch gebundener Diamantverbundpartikel, wobei das Verfahren umfasst:

Bilden eines Diamantausgangsmaterials, das eine Vielzahl an Diamantkörnern und Siliciumpartikeln umfasst;
Unterziehen des Diamantausgangsmaterials mindestens einem Vorverdichtungsverfahren, um ein Granulat zu bilden;
Bilden eines verdichteten Presslings in einem Verdichtungsverfahren unter Verwendung des Granulats, wobei der verdichtete Pressling keramisch gebundenes Diamantverbundmaterial umfasst, und
mechanisches Verarbeiten des verdichteten Presslings in einem Nachverdichtungsverfahren, in dem eine Vielzahl keramisch gebundener Diamantverbundpartikel gebildet wird,
wobei die keramisch gebundenen Diamantverbundpartikel eine Vielzahl an Diamantkörnern und an die Diamantkörner reaktionsgebundenes Siliciumcarbid umfassen, und
wobei eine Zusammensetzung der keramisch gebundenen Diamantverbundpartikel 60-90 Gew.-%, vorzugsweise 70-90 Gew.-%, bevorzugter 79-81 Gew.-%, bevorzugter 80 Gew.-% Diamant, 10-40 Gew.-% Siliciumcarbid, ≤2 Gew.-% Silicium umfasst,
wobei die keramisch gebundenen Diamantverbundpartikel eine Siebgröße zwischen 400 Mikrometer (40/50) und 35 Mikrometer (400/500) und einen Zähigkeitsindex zwischen 40 und 100, wie gemessen bei Raumtemperatur unter Verwendung eines Standard-Brüchigkeitstests, der umfasst, dass eine Menge an Produkt unter kontrollierten Bedingungen in einer Kugelmühle gemahlen wird und der Rest gesiebt wird, um die Verringerung der Partikelgröße zu messen, wobei 100 die höchste Zähigkeit ist, aufweisen.

2. Verfahren nach Anspruch 1, wobei das Diamantausgangsmaterial die Vielzahl an Diamantkörnern, Siliciumpartikel und ein inertes Material umfasst.

3. Verfahren nach Anspruch 1, ferner umfassend:

Mischen des Diamantausgangsmaterials mit einem Bindemittel und einem flüssigen Lösungsmittel, um eine Aufschlämmung zu bilden;
Verarbeiten der Aufschlämmung, um verfestigte Granulate zu bilden; und
Verarbeiten der verfestigten Granulate unter Verwendung des mindestens einen Vorverdichtungsverfahrens, wobei das mindestens eine Vorverdichtungsverfahren umfasst:

Bilden eines Grünkörpers, wobei der Grünkörper die verfestigten Granulate umfasst, und
Vertreiben von Bindemittelmaterial, um den Grünkörper zu entbindern.

4. Verfahren nach Anspruch 3, wobei das Verarbeiten der Aufschlämmung, um verfestigte Granulate zu bilden, Sprühen der Aufschlämmung in flüssigen Stickstoff, um eine Vielzahl gefrorener Granulate zu bilden, gefolgt von Gefriertrocknen der gefrorenen Granulate, um Lösungsmittel aus den verfestigten Granulaten zu entfernen, umfasst.

5. Verfahren nach Anspruch 3, wobei das Verarbeiten der Aufschlämmung, um verfestigte Granulate zu bilden, Sprühtrocknen der Aufschlämmung in einer erwärmten Umgebung umfasst, um ein festes, lösungsmittelfreies Granulat zu bilden.

6. Verfahren nach Anspruch 3, wobei die verfestigten Granulate vor dem Bilden des Grünkörpers mit einem inerten Material beschichtet werden.

7. Verfahren nach den Ansprüchen 3 oder 6, umfassend ein sekundäres Erwärmungsverfahren, wobei der entbinderte Grünkörper auf 1000°C bis 1600°C erwärmt wird, um die Festigkeit des entbinderten Grünkörpers zu verbessern.

8. Verfahren nach einem der Ansprüche 1, 3 und 6, wobei das Verdichtungsverfahren ein HPHT-Verfahren ist.

9. Verfahren nach den Ansprüchen 2 oder 6, wobei das inerte Material ausgewählt ist aus der Gruppe, bestehend aus Oxiden, Carbiden, Nitriden, Aluminaten, Silicaten, Nitraten und Carbonaten.

10. Verfahren nach Anspruch 2, wobei das inerte Material eine Partikelgröße (basierend auf D50) im Bereich von 1 bis 100 Mikrometer aufweist und in einer Menge von 1 bis 10 Gewichtsprozent (Gew.-%) vorliegt.

11. Verfahren nach den Ansprüchen 2 oder 6, wobei das inerte Material kubisches Bornitrid (cBN) ist.

12. Verfahren nach den Ansprüchen 2 oder 6, wobei das inerte Material ausgewählt ist aus der Gruppe, bestehend aus $Al_2O_3$, $SiO_2$ und SiC, und wobei das inerte Material eine Partikelgröße (basierend auf D50) im Bereich von 1 bis 50 Mikrometer aufweist und in einer Menge von 1 bis 10 Gewichtsprozent (Gew.-%) vorliegt.

13. Verfahren zur Herstellung keramisch gebundener Diamantverbundpartikel, wobei das Verfahren umfasst:

Bilden eines Diamantausgangsmaterials, das eine Vielzahl an Diamantpartikeln und Siliciumpartikeln umfasst;
Mischen des Diamantausgangsmaterials mit einem Bindemittel und einem Lösungsmittel, um eine Aufschlämmung zu bilden,
Sprühen der Aufschlämmung in flüssigen Stickstoff, um eine Vielzahl gefrorener Granulate zu bilden, gefolgt von Gefriertrocknen der gefrorenen Granulate, um das Lösungsmittel aus dem Granulat zu entfernen, oder
Sprühen der Aufschlämmung in eine erwärmte Kammer, um flüchtige Bestandteile zu entfernen;
Erwärmen des Granulats in einer inerten oder reduzierenden Atmosphäre, um das Bindemittel aus dem Granulat zu entfernen,
Sintern des porösen Granulats in einer inerten oder reduzierenden Atmosphäre, um Körner ("grit") aus keramisch gebundenem Diamantverbundmaterial zu bilden; und
mechanisches Verarbeiten der Körner unter Bildung einer Vielzahl keramisch gebundener Diamantverbundpartikel,
wobei die keramisch gebundenen Diamantverbundpartikel eine Vielzahl an Diamantpartikeln und an die Diamantpartikel reaktionsgebundenes Siliciumcarbid umfassen,

wobei eine Zusammensetzung der keramisch gebundenen Diamantverbundpartikel 60-90 Gew.-%, vorzugsweise 70-90 Gew.-%, bevorzugter 79-81 Gew.-%, bevorzugter 80 Gew.-% Diamant, 10-40 Gew.-% Siliciumcarbid, ≤2 Gew.-% Silicium umfasst,
wobei die keramisch gebundenen Diamantverbundpartikel eine Siebgröße zwischen 400 Mikrometer (40/50) und 35 Mikrometer (400/500) und einen Zähigkeitsindex zwischen 40 und 100, wie gemessen bei Raumtemperatur unter Verwendung eines Standard-Brüchigkeitstests, der umfasst, dass eine Menge an Produkt unter kontrollierten Bedingungen in einer Kugelmühle gemahlen wird und der Rest gesiebt wird, um die Verringerung der Partikelgröße zu messen, wobei 100 die höchste Zähigkeit ist, aufweisen.

14. Verfahren nach Anspruch 13, ferner umfassend ein sekundäres Erwärmungsverfahren, wobei der entbinderte Grünkörper auf 1000°C bis 1600°C erwärmt wird, um die Festigkeit des entbinderten Grünkörpers zu verbessern.

15. Verfahren zur Herstellung keramisch gebundener Diamantverbundpartikel, wobei das Verfahren umfasst:

Bilden eines Diamantausgangsmaterials, das eine Vielzahl an Diamantkörnern und Siliciumpartikeln und Partikel eines inerten Materials umfasst;
Unterziehen des Diamantausgangsmaterials einem Verdichtungsverfahren, das einen verdichteten Presskörper, der keramisch gebundenes Diamantverbundmaterial umfasst, aus dem Diamantausgangsmaterial bildet;
Unterziehen des verdichteten Presslings einem Nachverdichtungsverfahren, bei dem der verdichtete Pressling mechanisch verarbeitet wird, um eine Vielzahl keramisch gebundener Diamantverbundpartikel zu bilden; und
Abtrennen von Partikeln aus inertem Material von der Vielzahl keramisch gebundener Diamantverbundpartikel, wobei die keramisch gebundenen Diamantverbundpartikel eine Vielzahl an Diamantkörnern und an die Diamantkörner reaktionsgebundenes Siliciumcarbid umfassen,
wobei eine Zusammensetzung der keramisch gebundenen Diamantverbundpartikel 60-90 Gew.-%, vorzugsweise 79-81 Gew.-%, bevorzugter 80 Gew.-% Diamant, 10-40 Gew.-% Siliciumcarbid, ≤2 Gew.-% Silicium umfasst, und
wobei die keramisch gebundenen Diamantverbundpartikel eine Siebgröße zwischen 400 Mikrometer (40/50) und 35 Mikrometer (400/500) und einen Zähigkeitsindex zwischen 40 und 100, wie gemessen bei Raumtemperatur unter Verwendung eines Standard-Brüchigkeitstests, der umfasst, dass eine Menge an Produkt unter kontrollierten Bedingungen in einer Kugelmühle gemahlen wird und der Rest gesiebt wird, um die Verringerung der Partikelgröße zu messen, wobei 100 die höchste Zähigkeit ist, aufweisen.

16. Verfahren nach einem der Ansprüche 1, 3, 13 und 15, ferner umfassend ein Modifizieren der Oberflächenmorphologie der Vielzahl an Diamantkörnern vor dem Bilden des Diamantausgangsmaterials oder ein Auslaugen der Vielzahl keramisch gebundener Diamantverbundpartikel, wobei das Auslaugen umfasst, dass die keramisch gebundenen Diamantverbundpartikel mit Säuren wie Salpetersäure und Schwefelsäure oder ätzenden Chemikalien wie Natriumhydroxid oder Kaliumhydroxid in Kontakt gebracht werden.

17. Verfahren nach Anspruch 16, wobei das Modifizieren der Oberflächenmorphologie ein Modifizieren durch Oxidation oder Graphitisieren umfasst.

18. Verfahren nach einem der Ansprüche 1, 3, 13 und 15, ferner umfassend ein Beschichten der Vielzahl keramisch gebundener Diamantverbundpartikel mit einer Metalllegierung oder - verbindung.

19. Keramisch gebundene Diamantverbundpartikel, umfassend:

eine Vielzahl an Diamantkörnern; und
an die Diamantkörner reaktionsgebundenes Siliciumcarbid;
wobei die keramisch gebundenen Diamantverbundpartikel eine Siebgröße zwischen 400 Mikrometer (40/50) und 35 Mikrometer (400/500) und einen Zähigkeitsindex zwischen 40 und 100, wie gemessen bei Raumtemperatur unter Verwendung eines Standard-Brüchigkeitstests, der umfasst, dass eine Menge an Produkt unter kontrollierten Bedingungen in einer Kugelmühle gemahlen wird und der Rest gesiebt wird, um die Verringerung der Partikelgröße zu messen, wobei 100 die höchste Zähigkeit ist, aufweisen; und
wobei eine Zusammensetzung der keramisch gebundenen Diamantverbundpartikel 70-90 Gew.-%, vorzugsweise 79-81 Gew.-%, bevorzugter 80 Gew.-% Diamant, 10-30 Gew.-% Siliciumcarbid, ≤2 Gew.-% Silicium umfasst.

20. Keramisch gebundene Diamantverbundpartikel nach Anspruch 19, wobei die Diamantkörner eine bimodale Größenverteilung mit einer ersten Fraktion mit einem D50 von etwa 5 Mikrometern und einer zweiten Fraktion mit einem D50 von etwa 20 Mikrometern aufweisen.

21. Keramisch gebundene Diamantverbundpartikel nach Anspruch 19, wobei das Seitenverhältnis der Verbundpartikel im Bereich von 1,2 bis 5 liegt.

22. Keramisch gebundene Diamantverbundpartikel nach Anspruch 19, wobei das Diamantkorn monokristalliner oder polykristalliner Diamant ist.

**Revendications**

1. Procédé de production de particules composites de diamant lié à une céramique, le procédé comprenant les étapes consistant en :

   la formation d'une charge de diamant comprenant une pluralité de grains de diamant et des particules de silicium ;
   la soumission de la charge de diamant à au moins un processus de pré-consolidation pour former un granulé ;
   la formation d'une pastille densifiée dans un processus de consolidation en utilisant le granulé, la pastille densifiée comprenant un matériau composite de diamant lié à une céramique, et
   le traitement mécanique de la pastille densifiée dans un processus de post-consolidation dans lequel une pluralité de particules composites de diamant lié à une céramique est formée,
   dans lequel les particules composites de diamant lié à une céramique comprennent une pluralité de grains de diamant et du carbure de silicium lié par réaction aux grains de diamant, et
   dans lequel une composition de la particule composite de diamant lié à une céramique comprend 60 à 90 % en poids, de préférence 70 à 90 % en poids, plus préférablement 79 à 81 % en poids, plus préférablement 80 % en poids de diamant, 10 à 40 % en poids de carbure de silicium, $\leq 2$ % en poids de silicium, où les particules composites de diamant lié à une céramique ont un calibre compris entre 400 $\mu$m (40/50) et 35 $\mu$m (400/500) et un indice de dureté compris entre 40 et 100 comme mesuré à température ambiante en utilisant un test de friabilité standard qui implique le broyage à boulet d'une quantité de produit dans des conditions régulées et le tamisage du résidu pour mesurer la réduction de taille de particules, où 100 est la plus grande dureté.

2. Procédé selon la revendication 1, dans lequel la charge de diamant comprend la pluralité de grains de diamant, des particules de silicium et un matériau inerte.

3. Procédé selon la revendication 1, comprenant en outre les étapes consistant en :

   le mélange de la charge de diamant avec un liant et un solvant liquide pour former une suspension ;
   le traitement de la suspension pour former des granulés solidifiés ; et
   le traitement des granulés solidifiés en utilisant l'au moins un processus de pré-consolidation,
   dans lequel l'au moins un processus de pré-consolidation comprend :

      la formation d'un corps vert, le corps vert comprenant les granulés solidifiés, et
      le déliement du matériau liant du corps vert.

4. Procédé selon la revendication 3, dans lequel le traitement de la suspension pour former les granulés solidifiés comprend la pulvérisation de la suspension dans de l'azote liquide pour former une pluralité de granulés congelés suivie par la lyophilisation des granulés pour éliminer le solvant des granulés solidifiés.

5. Procédé selon la revendication 3, dans lequel le traitement de la suspension pour former les granulés solidifiés comprend le séchage par pulvérisation de la suspension dans un environnement chauffé pour former un granulé solide, exempt de solvant.

6. Procédé selon la revendication 3, dans lequel les granulés solidifiés sont enrobés d'un matériau inerte avant la formation du corps vert.

7. Procédé selon la revendication 3 ou 6, comprenant un processus de chauffage secondaire, dans lequel le corps vert délié est chauffé à 1 000 à 1 600°C pour améliorer la résistance du corps vert délié.

**8.** Procédé selon l'une quelconque des revendications 1, 3 et 6, dans lequel le processus de consolidation est un processus HPHT.

**9.** Procédé selon les revendications 2 ou 6, dans lequel le matériau inerte est choisi dans le groupe constitué par les oxydes, les carbures, les nitrures, les aluminates, les silicates, les nitrates et les carbonates.

**10.** Procédé selon la revendication 2, dans lequel le matériau inerte a une taille de particule (basée sur D50) comprise dans la plage allant de 1 à 100 $\mu$m et est présent en une quantité de 1 à 10 pour cent en poids (% en poids).

**11.** Procédé selon les revendications 2 ou 6, dans lequel le matériau inerte est du nitrure de bore cubique (cBN).

**12.** Procédé selon les revendications 2 ou 6, dans lequel le matériau inerte est choisi dans le groupe constitué par $Al_2O_3$, $SiO_2$ et SiC et dans lequel le matériau inerte a une taille de particule (basée sur D50) comprise dans la plage allant de 1 à 50 $\mu$m et est présent en une quantité de 1 à 10 pour cent en poids (% en poids).

**13.** Procédé de production de particules composites de diamant lié à une céramique, le procédé comprenant les étapes consistant en :

la formation d'une charge de diamant comprenant une pluralité de grains de diamant et des particules de silicium ;
le mélange de la charge de diamant avec un liant et un solvant pour former une suspension ;
la pulvérisation de la suspension dans de l'azote liquide pour former une pluralité de granulés congelés suivie par la lyophilisation du granulé congelé pour éliminer le solvant du granulé ou la pulvérisation de la suspension dans une chambre chauffée pour éliminer les composants volatils ;
le chauffage du granulé sous une atmosphère inerte ou réduite pour éliminer le liant du granulé ;
le frittage du granulé poreux sous une atmosphère inerte ou réduite pour former un grain de matériau composite de diamant lié à une céramique ; et
le traitement mécanique du grain pour former une pluralité de particules composites de diamant lié à une céramique,
dans lequel les particules composites de diamant lié à une céramique comprennent une pluralité de grains de diamant et du carbure de silicium lié par réaction aux grains de diamant,
dans lequel une composition de la particule composite de diamant lié à une céramique comprend 60 à 90 % en poids, de préférence 70 à 90 % en poids, plus préférablement 79 à 81 % en poids, plus préférablement 80 % en poids de diamant, 10 à 40 % en poids de carbure de silicium, $\leq$ 2 % en poids de silicium, où les particules composites de diamant lié à une céramique ont un calibre compris entre 400 $\mu$m (40/50) et 35 $\mu$m (400/500) et un indice de dureté compris entre 40 et 100 comme mesuré à température ambiante en utilisant un test de friabilité standard qui implique le broyage à boulet d'une quantité de produit dans des conditions régulées et le tamisage du résidu pour mesurer la réduction de taille de particules, où 100 est la plus grande dureté.

**14.** Procédé selon la revendication 13, comprenant en outre un processus de chauffage secondaire, dans lequel le corps vert délié est chauffé à 1 000 à 1 600°C pour améliorer la résistance du corps vert délié.

**15.** Procédé de production de particules composites de diamant lié à une céramique, le procédé comprenant les étapes consistant en :

la formation d'une charge de diamant comprenant une pluralité de grains de diamant et des particules de silicium et des particules de corps inerte ;
la soumission de la charge de diamant à un processus de consolidation pour former une pastille densifiée comprenant le matériau composite de diamant lié à une céramique à partir de la charge de diamant ;
la soumission de la pastille densifiée à un processus de post-consolidation dans lequel la pastille densifiée est traitée mécaniquement pour former une pluralité de particules composites de diamant lié à une céramique ; et
la séparation des particules de matériau inerte de pluralité de particules composites de diamant lié à une céramique,
dans lequel les particules composites de diamant lié à une céramique comprennent une pluralité de grains de diamant et du carbure de silicium lié par réaction aux grains de diamant,
dans lequel une composition de la particule composite de diamant lié à une céramique comprend 60 à 90 % en poids, de préférence 79 à 81 % en poids, plus préférablement 80 % en poids de diamant, 10 à 40 % en poids de carbure de silicium, $\leq$ 2 % en poids de silicium, et
dans lequel la particule composite de diamant lié à une céramique a un calibre compris entre 400 $\mu$m (40/50)

et 35 μm (400/500) et un indice de dureté de 40 à 100 comme mesuré à température ambiante en utilisant un test de friabilité standard qui implique le broyage à boulet d'une quantité de produit dans des conditions régulées et le tamisage du résidu pour mesurer la réduction de taille de particules, où 100 est la plus grande dureté.

16. Procédé selon l'une quelconque des revendications 1, 3, 13 et 15, comprenant en outre la modification d'une morphologie de surface de la pluralité de grains de diamant avant la formation de la charge de diamant ou la lixiviation de la pluralité de particules composites de diamant lié à une céramique, dans lequel la lixiviation comprend la mise en contact des particules composites de diamant lié à une céramique avec des acides tels que l'acide nitrique et l'acide sulfurique, ou des produits chimiques caustiques tels que l'hydroxyde de sodium ou l'hydroxyde de potassium.

17. Procédé selon la revendication 16, dans lequel la modification de la morphologie de surface comprend la modification par oxydation ou graphitisation.

18. Procédé selon l'une quelconque des revendications 1, 3, 13 et 15, comprenant en outre l'étape consistant en le revêtement de la pluralité de particules composites de diamant lié à une céramique avec un alliage ou un composé métallique.

19. Particules composites de diamant lié à une céramique, comprenant :

une pluralité de grains de diamant ; et
du carbure de silicium lié par réaction aux grains de diamant ;
où la particule composite de diamant lié à une céramique a un calibre de 400 μm (40/50) à 35 μm (400/500) et un indice de dureté de 40 à 100 comme mesuré à température ambiante en utilisant un test de friabilité standard qui implique le broyage à boulet d'une quantité de produit dans des conditions régulées et le tamisage du résidu pour mesurer la réduction de taille de particules, où 100 est la plus grande dureté ; et
où une composition de la particule composite de diamant lié à une céramique comprend 70 à 90 % en poids, de préférence 79 à 81 % en poids, plus préférablement 80 % en poids de diamant, 10 à 30 % en poids de carbure de silicium, ≤ 2 % en poids de silicium.

20. Particules composites de diamant lié à une céramique selon la revendication 19, dans lesquelles les grains de diamant ont une distribution de taille bimodale avec une première fraction ayant un D50 d'environ 5 μm et une seconde fraction ayant un D50 d'environ 20 μm.

21. Particules composites de diamant lié à une céramique selon la revendication 19, dans lesquelles le rapport de forme des particules composites est de 1,2 à 5.

22. Particules composites de diamant lié à une céramique selon la revendication 19, dans lesquelles le grain de diamant est un diamant monocristallin ou polycristallin.

FIGURE 1A

FIGURE 1B

FIGURE 1C

100

Form diamond feedstock comprising diamond particles and silicon particles

110

Process diamond feedstock under HPHT conditions to form a densified compact comprising ceramic-bonded diamond composite material

120

Mechanically process densified compact (with optional scrap of ceramic-bonded diamond composite material) to desired particle size (based on D50)

130

FIGURE 2

```
┌─────────────────────────────────────────────────┐
│ Form diamond feedstock comprising diamond         │
│ particles, silicon particles and particles of     │
│ inert material                                    │
│                                                   │
│                                        210        │
└─────────────────────────────────────────────────┘
```

```
┌─────────────────────────────────────────────────┐
│ Process diamond feedstock under HPHT conditions   │
│ to form a densified compact composed of           │
│ ceramic-bonded diamond composite material with    │
│ dispersed particles of inert material             │
│                                                   │
│                                        220        │
└─────────────────────────────────────────────────┘
```

200

```
┌─────────────────────────────────────────────────┐
│ Mechanically process densified compact (with      │
│ optional scrap of ceramic-bonded diamond          │
│ composite material) to desired particle size      │
│ (based on D50)                                    │
│                                                   │
│                                        230        │
└─────────────────────────────────────────────────┘
```

```
┌─────────────────────────────────────────────────┐
│ Separate inert material from ceramic-bonded       │
│ diamond composite particles                       │
│                                                   │
│                                        240        │
└─────────────────────────────────────────────────┘
```

FIGURE 3

22

```
┌─────────────────────────────────────────────────────────────────────┐
│  Mix diamond particles with silicon and binder and liquid to form a slurry │
│                              310                                      │
└─────────────────────────────────────────────────────────────────────┘
                                  │
                                  ▼
              ┌─────────────────────────────────────┐
              │   Spray slurry into liquid nitrogen to form  │
              │            frozen granules           │
              │                 320                  │
              └─────────────────────────────────────┘
                                  │
                                  ▼
      ┌───────────────────────────────────────────────────────────┐
      │   Remove ice or evaporative component from frozen granules  │
      │                          330                               │
      └───────────────────────────────────────────────────────────┘
```

300

| Process A | Process B | Process C | Process D | Process E |
|-----------|-----------|-----------|-----------|-----------|
| 400 | 500 | 600 | 700 | 800 |

## FIGURE 4A

```
┌──────────────────────────────────────────────────────────────────────┐
│  Mix diamond particles with silicon and binder and liquid to form a slurry │
│                                   360                                  │
└──────────────────────────────────────────────────────────────────────┘
                                   │
                                   ▼
                    ┌────────────────────────────────┐
                    │   Spray slurry into heated chamber to  │
                    │  evaporate liquid and form solid granules │
                    │                370                │
                    └────────────────────────────────┘
```

350

| Process A | Process B | Process C | Process D | Process E |
|-----------|-----------|-----------|-----------|-----------|
| 400 | 500 | 600 | 700 | 800 |

FIGURE 4B

24

```
┌─────────────────────────────────┐
│   Coat granules with inert       │
│   material                       │
│                       410        │
└─────────────────────────────────┘
                 │
                 ▼
┌──────────────────────────────────────────┐
│  Process coated granules into green body   │
│                              420            │
└──────────────────────────────────────────┘
                 │
                 ▼
┌──────────────────────────┐
│   Debind green body       │
│                 430        │
└──────────────────────────┘
          │        ┌──────────────────────────────┐
          │        │  Secondary heating process     │
          │        │                     440         │
          │        └──────────────────────────────┘
          ▼
┌──────────────────────────────────────────────────────┐
│  Process under HPHT conditions to form a densified compact │
│  composed of ceramic-bonded diamond composite material  │
│                                          450            │
└──────────────────────────────────────────────────────┘
                 │
                 ▼
┌──────────────────────────────────────────────────────┐
│  Mechanically process densified compact to desired particle size │
│  (based on D50)                                         │
│                                          460            │
└──────────────────────────────────────────────────────┘
```

400

FIGURE 5

25

FIGURE 6

```
                    ┌──────────────────────────┐
                    │   Coat granules with inert│
                    │        material           │
                    │            510            │
                    └──────────────────────────┘
                                 │
                                 ▼
              ┌──────────────────────────────────────┐
              │ Process coated granules into green body│
              │                  520                   │
              └──────────────────────────────────────┘
                                 │
                                 ▼
                    ┌──────────────────────────┐
                    │     Debind green body     │
                    │            530            │
                    └──────────────────────────┘
                                 │
                                 ▼
        ┌────────────────────────────────────────────────┐
        │  Sinter diamond feedstock at elevated           │
        │  temperature in inert or reducing atmosphere to │
        │  form ceramic-bonded diamond composite          │
        │  material                                       │
        │                                     540         │
        └────────────────────────────────────────────────┘
                                 │
                                 ▼
              ┌──────────────────────────────────────┐
              │  Mechanically process ceramic-        │
              │  bonded diamond composite material    │
              │  to desired particle size (based on   │
              │  D50)                                 │
              │                             550       │
              └──────────────────────────────────────┘
```

500

```
┌─────────────────────────────────────────────┐
│         Process granules into green body      │
│                                          610  │
└─────────────────────────────────────────────┘
                        │
                        ▼
            ┌─────────────────────────┐
            │    Debind green body     │
            │            620           │
            └─────────────────────────┘

                ┌─────────────────────────────────┐
                │     Secondary heating process    │
                │                 630              │
                └─────────────────────────────────┘

┌─────────────────────────────────────────────────────┐
│  Process under HPHT conditions to form a densified    │
│     compact composed of ceramic-bonded diamond        │
│              composite material                       │
│                                            640        │
└─────────────────────────────────────────────────────┘
                        │
                        ▼
┌─────────────────────────────────────────────────────┐
│  Mechanically process densified compact to desired    │
│             particle size (based on D50)              │
│                                            650        │
└─────────────────────────────────────────────────────┘
```

600

FIGURE 7

700 —

Process granules into green body
710

Debind green body
720

Sinter green body at elevated temperature in inert or reducing atmosphere to form a ceramic-bonded diamond composite material
730

Mechanically process ceramic-bonded diamond composite material to desired particle size (based on D50)
740

FIGURE 8

800

Sinter granules at elevated temperature in inert
or reducing atmosphere to form ceramic-
bonded diamond composite material
810

(Optional)
Mechanically process granules to
desired particle size (based on D50)
820

FIGURE 9

```
                    ┌─────────────────────────────────────────────────┐
                    │                  (Optional)                       │
                    │  Modify surface morphology of diamond particles   │
                    │      by air oxidation or graphitization method    │
                    │                                          910      │
                    └─────────────────────────────────────────────────┘
                                          │
                                          ▼
                    ┌─────────────────────────────────────────────────┐
                    │   Form granules comprising (optionally modified)  │
                    │           diamond particles and silicon           │
                    │                                          920      │
                    └─────────────────────────────────────────────────┘
                                          │
                                          ▼
                    ┌─────────────────────────────────────────────────┐
                    │   Process granules under HPHT conditions to form  │
                    │    a densified compact composed of ceramic-bonded │
                    │             diamond composite material            │
                    │                                          930      │
                    └─────────────────────────────────────────────────┘
                                          │
                                          ▼
                    ┌─────────────────────────────────────────────────┐
                    │  Mechanically process densified compact to desired│
                    │           particle size (based on D50)            │
                    │                                          940      │
                    └─────────────────────────────────────────────────┘
                                          │
                                          ▼
                    ┌─────────────────────────────────────────────────┐
                    │                  (Optional)                       │
                    │  Leach particles in a one acid solution or a      │
                    │  mixture of two more acids or a caustic solution  │
                    │        to enhance particle surface textures       │
                    │                                          950      │
                    └─────────────────────────────────────────────────┘
```

900

FIGURE 10

1000

1000

FIGURE 11A

1010

1010

FIGURE 11B

Mechanically process densified compact to desired particle size (based on D50)

Or

Mechanically process ceramic-bonded diamond composite material to desired particle size (based on D50)

1110

Separate inert material from ceramic-bonded diamond composite particles

1120

(Optional)

Coat with metal alloy or compound

1130

1100

FIGURE 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4874398 A
- US 4948388 A
- US 4985051 A
- US 5010043 A
- US 5106393 A
- WO 9912867 A
- US 20130167447
- JP H08113774 B
- US 8182562 B
- US 3141746 A
- US 3745623 A
- US 3609818 A
- US 3850591 A
- US 4394170 A
- US 4403015 A
- US 4797326 A
- US 4954139 A
- US 14194086 B

**Non-patent literature cited in the description**

- Standard Specification for Wire Cloth and Sieves for Testing Purposes. *ASTM specification EI 1-09*